# EUROPÄISCHE PATENTANMELDUNG

(11) **EP 2 985 534 A1**
(43) Veröffentlichungstag der Anmeldung: **17.02.2016**
(21) Anmeldenummer: 15180373.1
(22) Anmeldetag: 10.08.2015
(51) Int. Cl.: F24C 15/20, B01D 46/00, B01D 46/10

(54) **FLÄCHENELEMENT UND DUNSTABZUGSHAUBE**

(30) Priorität: 14.08.2014 DE 102014216166
(71) Anmelder: BSH Hausgeräte GmbH, 81739 München (DE)
(72) Erfinder: Klemm, Jochen, 69207 Sandhausen (DE)

(57) **Zusammenfassung**

Die vorliegende Erfindung betrifft ein Flächenelement (1) für eine Dunstabzugshaube,
welches zur lösbaren Befestigung an einer Dunstabzugshaube (8) mindestens ein Befestigungselement (2) mit mindestens einem Wirkbereich (3) aufweist, wobei das mindestens ein Befestigungselement (2) an der Oberseite des Flächenelements (1) angeordnet ist, wobei das mindestens ein Befestigungselement (2) zwischen einer Ruheposition (P1) und einer Betriebsposition (P2) bewegbar gelagert ist, wobei in der Ruheposition (P1) der Wirkbereich (3) des Befestigungselements (2) an der Oberseite des Flächenelements (1) anliegt, und in der Betriebsposition (P2) der Wirkbereich des Befestigungselements (2) die Oberseite des Flächenelements (1) überragt.

Weiterhin betrifft die vorliegende Erfindung eine Dunstabzugshaube in welcher das erfindungsgemäße Flächenelement angeordnet und befestigt ist.

## Beschreibung

Die vorliegende Erfindung betrifft ein Flächenelement für eine Dunstabzugshaube, welches mindestens ein Befestigungselement zur Befestigung des Flächenelements an einer Dunstabzugshaube aufweist. Weiterhin betrifft die Erfindung eine Dunstabzugshaube in welcher ein Flächenelement angeordnet ist, welches mittels einer lösbaren Verbindung zwischen dem mindestens einen Befestigungselement und einem an der Dunstabzugshaube angeordneten Gegenelement an der Dunstabzugshaube befestigt ist.

Dunstabzugshauben weisen in der Regel ein Gehäuse mit einer darin vorgesehenen Ansaugöffnung auf, über die verunreinigte Luft, die auch als Wrasen bezeichnet wird, in das Gehäuse gesaugt wird. In der Ansaugöffnung ist ein Flächenelement angeordnet, welches üblicherweise ein Fettfilter, ein Wrasenleitblech oder eine Kombination aus Fettfilter und Wrasenleitblech aufweist beziehungsweise darstellt. So ist beispielsweise aus der DE 10 2008 020 149 A1 bekannt, ein Wrasenleitblech mit einem Fettfilter zu einer gemeinsamen Filtereinheit zu kombinieren. Das Wrasenleitblech und der Fettfilter bilden dabei ein Flächenelement und werden gemeinsam an dem Gehäuse montiert.

Das Flächenelement wird in dem Gehäuse der Dunstabzugshaube angeordnet und an der Dunstabzugshaube befestigt. Damit das Flächenelement zur Reinigung oder zum Austausch dem Gehäuse der Dunstabzugshaube entnommen werden kann, erfolgt die Befestigung des Flächenelements an der Dunstabzugshaube mittels einer lösbaren Verbindung.

Zur Befestigung von Flächenelementen für Dunstabzugshauben, insbesondere Fettfilter, Wrasenleitbleche und Kombinationen aus Fettfilter und Wrasenleitblech, werden in der Regel Verriegelungsvorrichtungen verwendet, die einen mit einer Feder in einer Verriegelungsstellung vorgespannten Riegel aufweisen, der entgegen der Federkraft von dem Benutzer der Dunstabzugshaube in eine Offenstellung bewegt werden kann. An dem Riegel ist hierzu ein Griff vorgesehen. Eine bekannte Verriegelvorrichtung ist beispielsweise in der DE 10 2007 054 336 A1 beschrieben.

Ein Nachteil dieser Art der Verriegelungsvorrichtung für ein Flächenelement ist der komplexe Aufbau der Verriegelungsvorrichtung, was sich unter anderem nachteilig auf die Herstellungskosten auswirkt.

Darüber hinaus besitzt diese Verriegelungsvorrichtung aufgrund ihrer Abmessungen einen vergleichsweise hohen Platzbedarf. Dies wirkt sich auf die zur Verfügung stehende, freie Oberfläche des Flächenelements aus, da bei vorgegebener Größe eines Flächenelements die durch die Verriegelungsvorrichtung bedeckte Oberfläche nicht mehr als potenzielle Zutrittsfläche für verunreinigte Luft zur Verfügung steht.

Auch überragt die Verriegelungsvorrichtung der DE 10 2007 054 336 A1 die obere Oberfläche oder vordere Oberfläche des Flächenelements und zumindest durch den vorgesehenen Griff die untere Oberfläche des Flächenelements. Dies kann zu erhöhten Verpackungskosten und Transportkosen führen. Höhere Verpackungskosten entstehen, wenn die Verpackung zumindest in einem Teilbereich auf die Abmessungen des Verriegelungselements angepasst werden muss. Zur leichteren Stapelbarkeit der verpackten Flächenelemente werden üblicherweise die Dimensionen der Verpackung insgesamt auf die Höhe der Verriegelungsvorrichtung angepasst, obwohl der restliche Bereich des Flächenelements eine geringere Höhe besitzt. Neben einer größeren Verpackung kann damit auch Polstermaterial erforderlich werden. Diese Faktoren wirken sich insofern auch auf die Transportkosten aus, da neben dem Gewicht der transportierten Ware auch das Volumen einen Einfluss auf die Transportkosten hat.

Zum anderen ist die Bedienung der Verriegelungsvorrichtung ergonomisch nachteilig, insbesondere, wenn das Flächenelement schwer ist, was insbesondere bei einem Kombinationselement aus Fettfilter und Wrasenleitblech der Fall ist.

Aufgabe der vorliegenden Erfindung ist es daher, die Nachteile des Standes der Technik zu überwinden.

Der Erfindung liegt die Aufgabe zu Grunde, eine Lösung zu schaffen, durch die ein vorteilhaftes Flächenelement bereit gestellt wird, das auf mechanisch einfach Weise, lösbar an einer Dunstabzugshaube befestigt und von dieser abgenommen werden kann, wobei der Raumbedarf eines am Flächenelement angeordneten Befestigungselements an der Dunstabzugshaube vergleichsweise gering ist und die Befestigung sicher und auch komfortabel in der Bedienung ausgestaltet ist und dennoch ein geringer Aufwand bei der Lagerung und dem Transport sowie bei der Reinigung des Flächenelements gewährleistet ist.

Der Erfindung liegt die Erkenntnis zu Grunde, dass diese Aufgabe gelöst werden kann durch ein Flächenelement, welches mindestens ein Befestigungselement mit einem Wirkbereich aufweist, welches an der Oberfläche des Flächenelements angeordnet ist und zwischen einer Ruheposition und einer Betriebsposition bewegbar gelagert ist. Bewegbar bedeutet im Sinne der vorliegenden Erfindung, dass das mindestens eine Befestigungselement beispielsweise verschiebbar und/oder verschwenkbar, insbesondere verschwenkbar ist.

Die Aufgabe wird erfindungsgemäß gelöst durch ein Flächenelement für eine Dunstabzugshaube, das zur lösbaren Befestigung an einer Dunstabzugshaube mindestens ein Befestigungselement mit mindestens einem Wirkbereich aufweist. Das Flächenelement ist dadurch gekennzeichnet, dass das mindestens eine Befestigungselement an der Oberseite des Flächenelements angeordnet ist, das mindestens eine Befestigungselement zwischen einer Ruheposition und einer Betriebsposition bewegbar gelagert ist, in der Ruheposition der Wirkbereich des mindestens einen Befestigungselements an der Oberseite des Flächenelements anliegt, und in der Betriebsposition der Wirkbereich des mindestens einen Befestigungselements die Oberseite des Flächenelements überragt.

Richtungsangaben, wie oben und unten bzw. die davon abgeleiteten Angaben Oberseite und Unterseite beziehen sich auf das Flächenelement in der Ausrichtung, welche dieses in einem horizontal in einer Dunstabzugshaube eingebauten Zustand besitzt. Bei Dunstabzugshauben, bei denen die Ansaugöffnung aus der Horizontalen heraus geneigt ist, sind diese Angaben entsprechend zu interpretieren. Insbesondere wird als Oberseite des Flächenelements die Seite des Flächenelements bezeichnet, die dem Inneren der Dunstabzugshaube zugewandt ist und die auch als Reinluftseite bezeichnet werden kann. Die Unterseite des Flächenelements, die der Reinluftseite gegenüberliegt, kann auch als Anströmseite bezeichnet werden.

Als Flächenelement wird im Sinne der vorliegenden Erfindung ein Element bezeichnet, das zumindest teilweise in die Ansaugöffnung einer Dunstabzugshaube, insbesondere in ein Gehäuse der Dunstabzugshaube, eingebracht wird. Insbesondere wird als Flächenelement ein Element zur Beeinflussung der Luftströmung im Bereich der Ansaugöffnung bezeichnet. Das Flächenelement kann daher auch als Luftleitelement, Filterelement oder als eine Kombination aus Luftleitelement und Filterelement gebildet sein. Flächenelemente können beispielsweise ein Fettfilter, ein Wrasenleitblech oder eine Kombinationen aus Fettfilter und Wrasenleitblech umfassen oder darstellen.

Das Flächenelement kann in allen im Stand der Technik bekannten Dunstabzugshauben verwendet werden, bei denen die Verwendung von Flächenelementen vorgesehen ist.

Im Zusammenhang der vorliegenden Erfindung ist ein Befestigungselement ein Element einer mindestens zweiteilig ausgestalteten Verbindung zwischen Flächenelement und Dunstabzugshaube zur lösbaren Befestigung des Flächenelements an der Dunstabzugshaube. Zur Ausbildung dieser lösbaren Verbindung zwischen dem mindestens einen Flächenelement und einer Dunstabzugshaube kommt der Wirkbereich des mindestens einen Befestigungselements am Flächenelement mit einem an der Dunstabzugshaube angeordneten Gegenelement in Kontakt. Unter dem Wirkbereich des mindestens einen Befestigungselements ist der Bereich des Befestigungselements zu verstehen welcher mit dem Gegenelement eine Verbindung ausbildet. Das Befestigungselement kann hierbei ausschließlich aus dem Wirkbereich bestehen, das heißt durch diesen gebildet sein.

Im Folgenden wird die Erfindung im Wesentlichen unter Bezugnahme auf ein Befestigungselement beschrieben. Es liegt allerdings auch im Rahmen der Erfindung, dass an dem Flächenelement mehrere Befestigungselemente vorgesehen sind. Diese können zueinander gleich oder unterschiedlich ausgebildet sein. Vorzugsweise sind aber alle Befestigungselemente bewegbar an der Oberseite des Flächenelements vorgesehen.

Je nach Ausgestaltung des mindestens einen Befestigungselements ist üblicherweise ein entsprechendes Gegenelement erforderlich, damit eine lösbare Verbindung ausgebildet werden kann. Welcher Art der Kontakt zwischen dem Wirkbereich des mindestens einen Befestigungselements und dem Gegenelement zur Befestigung des Flächenelements ist, hängt von der Art der Befestigung ab. Das Befestigungselement dient vorzugsweise zur mechanischen Befestigung des Flächenelements an dem Gegenelement und somit der Dunstabzugshaube. Es liegt aber auch im Rahmen der Erfindung, dass über das Befestigungselement beispielsweise eine magnetische Verbindung zwischen dem Flächenelement und dem Gegenelement und damit der Dunstabzugshaube hergestellt wird. In diesem Fall wird der Wirkbereich durch einen Magneten oder ein magnetisierbares Material gebildet. Beispiele für Wirkbereiche sind darüber hinaus Rastvorrichtungen, wie Rastnasen, Rastausnehmungen oder Kulissen. Beispiele für Verbindungen gemäß der vorliegenden Erfindung sind Einhaken, Einhängen, Einrasten oder eine magnetische Verbindung sein.

Wird nachfolgend offenbart, dass eine Verbindung ausgebildet wird, so bedeutet dies, dass der Wirkbereich des mindestens einen Befestigungselements und ein entsprechendes Gegenelement derart zusammenwirken, dass die für die Befestigungsart spezifische Kopplung erfolgt.

Wenn im Weiteren von in Kontakt Bringen des mindestens einen Befestigungselements mit einem Gegenelement gesprochen wird, ist darunter die Form des in Kontakt Bringens zu verstehen, welches zur Ausbildung der für die Verbindung zwischen dem Wirkbereich des mindestens einen Befestigungselements und dem Gegenelement erforderlich ist.

Das mindestens eine Befestigungselement ist an der Oberseite des Flächenelements angeordnet und zwischen einer Ruheposition und einer Betriebsposition bewegbar gelagert. Dies bedeutet, dass das Befestigungselement durch Bewegen, beispielsweise Verschieben und/oder Verschwenken zumindest in die Ruheposition und die Betriebsposition gebracht werden kann. Bei dieser Bewegung werden Zwischenpositionen durchlaufen. In der Ruheposition liegt der Wirkbereich des mindestens einen Befestigungselements an der Oberseite des Flächenelements an, in der Betriebsposition überragt der Wirkbereich des mindestens einen Befestigungselements die Oberseite des Flächenelements. Insbesondere besteht vorzugsweise in der Betriebsposition ein Abstand zwischen dem Wirkbereich des Befestigungselements und der Oberseite des Flächenelements.

Das Befestigungselement kann in der Ruheposition auf einer eben ausgestalteten Oberseite des Flächenelements aufliegen. Bei dieser Ausführungsform weist das Befestigungselement vorzugsweise eine geringe Dicke oder Stärke auf. Hierdurch kann ein geringer Abstand zwischen der Oberseite des Befestigungselements in der Ruheposition und der Oberseite des Flächenelements gewährleistet werden.

In einer bevorzugten Ausführungsform der Erfindung umfasst die Oberseite des Flächenelements eine Ausnehmung, in welcher der Wirkbereich des mindestens einen Befestigungselements oder das mindestens eine Befestigungselement einschließlich des Wirkbereichs aufgenommen werden können. Auch bei dieser Anordnung liegen der Wirkbereich des mindestens einen Befestigungselements oder das mindestens eine Befestigungselement einschließlich des Wirkbereichs in der Ruheposition an der Oberseite des Flächenelements an, wobei die Oberseite des Flächenelements jedoch im Bereich der Ausnehmung abgesenkt ist.

Die Ruheposition ist die Anordnung des Wirkbereichs des mindestens einen Befestigungselements in Bezug auf das Flächenelement, wenn kein in Kontakt Bringen mit einem Gegenelement beabsichtigt ist. Dies wird immer dann der Fall sein, wenn das Flächenelement nicht in einer Dunstabzugshaube angeordnet ist. Beispiele, in denen die Ausrichtung des Wirkbereichs in der Ruheposition vorteilhaft ist, sind beispielsweise der Transport des Flächenelements und dessen Lagerung oder aber die Reinigung des Flächenelements. Da der Wirkbereich des Befestigungselements in der Ruheposition an der Oberseite des Flächenelements anliegt, weist das mindestens eine Befestigungselement in der Ruheposition einen vergleichsweise geringen Platzbedarf auf. Das ist insbesondere vorteilhaft, weil dadurch Verpackungsmaterial, Verpackungsvolumen und Transportvolumen gering sind.

In der Betriebsposition überragt der Wirkbereich des mindestens einen Befestigungselements die Oberseite des Flächenelements. Diese Betriebsposition ermöglicht die Befestigung des Flächenelements an einer Dunstabzugshaube. Durch das Überragen der Oberseite des Flächenelements in der Betriebsposition steht der Wirkbereich des mindestens einen Befestigungselements von der Oberseite des Flächenelements ab und kann mit einem Gegenelement an einer Dunstabzugshaube in Kontakt gebracht werden, wodurch eine Verbindung zwischen Wirkbereich und Gegenelement ausgebildet werden kann.

Ein Vorteil des Vorsehens des Befestigungselements an der Oberseite des Flächenelements besteht darin, dass die Seitenflächen des Flächenelements und die Unterseite des

Flächenelements keiner besonderen Auslegung bedürfen. Insbesondere ist es nicht erforderlich an der Unterseite des Flächenelements einen Griff vorzusehen oder die Seitenflächen des Flächenelements, insbesondere eines Rahmens des Flächenelements mit Durchlässen für Stifte zu versehen, wie dies im Stand der Technik erforderlich ist. Zudem ist durch das Vorsehen des Befestigungselements an der Oberseite des Flächenelements auch das Einführen des Flächenelements in die Ansaugöffnung vereinfacht, da es im Gegensatz zum Stand der Technik während des Einführens nicht erforderlich ist, einen Griff in einer vorbestimmten Stellung zu halten, um den Überstand von Stiften über die Seitenflächen des Flächenelements zu verhindern.

Da das Befestigungsmittel zwischen Ruheposition und Betriebsposition bewegbar ist, kann das mindestens eine Befestigungselement sowohl von der Ruheposition in die Betriebsposition, als auch von der Betriebsposition in die Ruheposition zurückgeführt werden. Das ist vorteilhaft, wenn das Flächenelement der Dunstabzugshaube wieder entnommen wird und der die Oberseite überragende Wirkbereich vor Beschädigung geschützt werden soll.

Zur bewegbaren Lagerung des Befestigungselements, das auch als Befestigungsmittel bezeichnet wird, können alle im Stand der Technik bekannten, geeigneten Lager verwendet werden.

Vorzugsweise ist das Lager an einem Ende des Befestigungselements vorgesehen, das dem Ende, an dem sich der Wirkbereich befindet, gegenüberliegt. Das Lager, das zur Verbindung des Befestigungselements mit dem Flächenelement verwendet wird, stellt vorzugsweise ein Lager dar, das nur einen Freiheitsgrad ausweist. Insbesondere wird ein Lager verwendet, das eine axiale und radiale Bewegung des Befestigungselements um eine Drehachse verhindert aber eine Drehbewegung um die Drehachse zulässt. Hierdurch kann ein versehentliches Aushängen oder Verschieben des Befestigungselements an dem Flächenelement verhindert werden.

Bevorzugt weist das Flächenelement ein Filterelement, das auch als Filtereinheit bezeichnet wird, auf. Weiter bevorzugt umfasst das Flächenelement einen Rahmen und die Filtereinheit ist in dem Rahmen aufgenommen. Dieses Ausführungsbeispiel ist vorteilhaft, weil sie die Anordnung einer Filtereinheit in einer Dunstabzugshaube ermöglicht, wobei die vorzugsweise im Rahmen des Flächenelements gehaltene Filtereinheit als Flächenelement an der Dunstabzugshaube lösbar befestigt werden kann. Der Rahmen umschließt vorzugsweise die Filtereinheit zumindest in einem Teilbereich mindestens eines ihrer Randbereiche. Ist eine Filtereinheit in dem Flächenelement aufgenommen, so bildet die Oberseite des Filterelements die Oberseite des Flächenelements aus. Eine in der Oberseite des Flächenelements ausgebildete Ausnehmung zur Aufnahme des Wirkbereichs des mindestens einen Befestigungselements beziehungsweise des mindestens einen Befestigungselements einschließlich des Wirkbereichs kann dann in der Oberseite des Filterelements ausgebildet sein. Da der Wirkbereich des mindestens einen Befestigungselements in der Betriebsposition die Oberseite des Flächenelements überragt, wird auch ein in dem Flächenelement angeordnetes Filterelement nicht von dem Wirkbereich des mindestens einen Befestigungselements abgedeckt. Die Filterfläche wird somit nicht durch den Wirkbereich in der Betriebsposition verringert, was vorteilhaft ist.

Der Rahmen ist im einfachsten Fall eben ausgestaltet, beispielsweise als Rechteck. Der Rahmen kann aber auch abgerundet rechteckig oder oval ausgelegt sein. Grundsätzlich kann der Rahmen auch nicht eben, insbesondere beispielsweise gekrümmt ausgestaltet sein, um etwas besser einer bestimmten Form der Dunstabzugshaube angepasst zu sein.

Der Rahmen kann insbesondere zur Lagerung des Befestigungselements dienen. Ein Vorteil, den ein solches Flächenelement aufweist, das ein Filterelement aufweist, das in einem Rahmen gehalten wird, besteht darin, dass Filterelemente in der Regel in gewissen Zeitabständen gereinigt werden müssen. Da bei dem erfindungsgemäßen Flächenelement das Befestigungselement bewegbar, also beispielsweise verschiebbar oder schwenkbar gelagert ist, kann das Befestigungselement nach dem Entnehmen des Flächenelements von der Dunstabzugshaube in die Ruheposition gebracht werden und es besteht somit keine Gefahr des Abbrechens des Befestigungselements während der Reinigung.

Vorteilhaft ist auch ein Ausführungsbeispiel, bei welchem das Flächenelement einen Fettfilter, ein Wrasenleitblech oder eine Kombination aus Fettfilter und Wrasenleitblech aufweist. Das erfindungsgemäße Flächenelement kann durch Aufnahme üblicher oder spezieller Filterelemente oder deren Kombinationen an die Bedürfnisse des Nutzers angepasst werden. Je nach den räumlichen Gegebenheiten und dem Aufkommen an verunreinigter Luft können handelsübliche Fettfilter, Wrasenleitbleche, deren Kombinationen oder spezielle Filter in dem Flächenelement aufgenommen werden.

Bevorzugt ist auch ein Ausführungsbeispiel des Flächenelements, bei welchem das mindestens eine Befestigungselement einen Sockelbereich aufweist und der Wirkbereich auf dem Sockelbereich angeordnet ist. Zur Befestigung des Flächenelements an der Dunstabzugshaube wird eine Verbindung zwischen dem mindestens einen Befestigungselement und einem an der Dunstabzugshaube angeordneten Gegenelement ausgebildet. Hierzu ist ein Kontakt zwischen dem Wirkbereich des mindestens einen Befestigungselements und Gegenelement erforderlich, so dass Befestigungselement und Gegenelement unter Ausbildung einer lösbaren Verbindung zusammenwirken. Es können unterschiedliche Befestigungselemente am erfindungsgemäßen Flächenelement angeordnet werden, die sich in ihrem Aufbau und ihren Abmessungen von einander unterscheiden können. Da das mindestens eine Befestigungselement bewegbar, also beispielsweise verschiebbar oder verschwenkbar zwischen einer Ruheposition und Betriebsposition gelagert ist, muss das verwendete Befestigungsmittel einen Bereich aufweisen, über welchen es bewegbar angeordnet werden kann. Wird ein Befestigungsmittel verwendet, das ausschließlich aus einem Wirkbereich besteht, muss dieser genügend groß sein, um das Befestigungsmittel bewegbar anordenbar zu machen. Auch darf durch die Mittel zur Anordnung des mindestens einen Befestigungselements der Wirkbereich des Befestigungselements nicht derart eingeschränkt werden, dass die Befestigung des Flächenelements durch die Verbindung zwischen Wirkbereich und Gegenelement der Abzugshaube beeinträchtigt oder verhindert wird.

Vorteilhaft ist deshalb ein Befestigungselement, welches einen Sockelbereich umfasst, auf welchem der Wirkbereich angeordnet ist. Die Mittel zur bewegbaren Lagerung können bei diesem Ausführungsbeispiel am Sockelbereich angeordnet werden. Beispielsweise können an dem Sockelbereich Lagerstifte vorgesehen sein. Der Wirkbereich ist mit dem Sockelbereich vorzugsweise einteilig ausgestaltet oder weist zumindest eine starre Verbindung mit diesem auf. Als auf dem Sockelbereich angeordnet wird daher ein Wirkbereich verstanden, der sich an den Sockelbereich anschließt oder im freien Ende des Sockelbereiches vorgesehen ist. Als Wirkbereich des mindestens einen Befestigungselements kommt dann auch ein Element in Betracht, welches bereits aufgrund seiner geringen Größe oder seiner Struktur nicht selbstständig bewegbar anordenbar wäre. Ein Beispiel eines Befestigungselements, bei welchem der Wirkbereich auf einem Sockelbereich angeordnet ist, ist in der DE 10 2010 039 454 A1 offenbart.

Vorteilhaft ist ein Flächenelement, bei welchem das mindestens eine Befestigungselement irreversibel aus der Ruheposition in die Betriebsposition bewegbar ist. Im Unterschied zu dem Ausführungsbeispiel, bei welchem ein Bewegen zwischen Ruheposition und Betriebsposition und aus der Betriebsposition wiederum in die Ruheposition möglich ist, gestattet dieses Ausführungsbeispiel die Identifikation bereits gebrauchter oder zum Gebrauch vorbereiteter Flächenelemente. Wird ein erfindungsgemäßes Flächenelement für die Befestigung in der Dunstabzugshaube vorbereitet, so wird das mindestens eine Befestigungselement aus der Ruheposition in die Betriebsposition bewegt, beispielsweise verschwenkt. In der Betriebsposition kann das mindestens eine Befestigungselement über seinen Wirkbereich eine Verbindung mit einem Gegenelement an der Dunstabzugshaube ausbilden. Ist dieses Herausklappen des mindestens einen Befestigungselements erfolgt, so verbleibt bei diesem Ausführungsbeispiel des Flächenelements das mindestens eine Befestigungselement in dieser Betriebsposition. Eine Verwendung dieses Flächenelements, und sei es nur in Vorbereitung auf das Einbringen in eine Dunstabzugshaube, und die anschließende Rückgabe in den Handel als unbenutzter Gegenstand ist somit nicht mehr möglich. Dies ist deshalb vorteilhaft, weil gerade in einem Bereich, in dem mit Lebensmittel gearbeitet wird, die hygienische Unbedenklichkeit von Materialien gewährleistet werden sollte. Auch kann der nicht gerechtfertigte Eindruck des Benutzers, dass er ein bereits verwendetes Flächenelement erworben hat, damit ausgeräumt werden. Zudem kann ein versehentliches Bewegen des Befestigungselements bei Verbindung mit dem Gegenelement, das heißt bei der Herstellung der lösbaren Verbindung zur Verbindung mit der Dunstabzugshaube, verhindert werden.

Bevorzugt ist auch ein Ausführungsbeispiel des erfindungsgemäßen Flächenelements, welches mindestens ein Arretierelement zur Arretierung des mindestens einen Befestigungselements in der Ruheposition, der Betriebsposition oder der Ruheposition und der Betriebsposition aufweist. In der vorliegenden Erfindung kann eine Vielzahl verschiedener Befestigungselemente verwendet werden. Diese Befestigungselemente können sich in Gewicht, Schwerpunkt und Abmessung unterscheiden. Wenn das Bewegen, also beispielsweise Verschieben oder Verschwenken des mindestens einen Befestigungselements zwischen Ruheposition und Betriebsposition nur als Reaktion auf eine zielgerichtete Manipulation eines Nutzers und nicht selbsttätig erfolgen soll, kann bei bestimmten Befestigungselementen eine Arretierung erforderlich sein. Dies ist dann der Fall, wenn ohne Arretierung das mindestens eine Befestigungselement beispielsweise beim Schwenken, Umdrehen oder Kippen aus der Ruheposition in die Betriebsposition oder umgekehrt überführt wird.

Weiterhin ist die Anordnung eines Arretierelements vorteilhaft, um den Wirkbereich des mindestens einen Befestigungselements in Kontakt mit dem Gegenelement zu bringen, ohne dass das Befestigungselement unbeabsichtigt wegklappen oder weggeschoben kann. Je nach Befestigungselement und Gegenelement kann zum in Kontakt Bringen der Elemente ein Kraftaufwand erforderlich sein, der jedoch nicht zum Wegklappen oder Wegschieben des mindestens einen Befestigungselements führen sollte. Wird das mindestens eine Befestigungselement mittels des Arretierelements in der Betriebsposition gehalten, so erhöht dies die Benutzerfreundlichkeit des Flächeelements, weil auch eine versehentlich zu starke oder falsch gerichtete Krafteinwirkung nicht zwingend zu einem Wegklappen oder Wegschieben des Befestigungselements führt.

Es ist aber auch möglich, dass das Arretierelement so ausgestaltet ist, dass bei Überschreiten einer Arretierkraft das Befestigungselement aus der Betriebsposition oder der Ruheposition heraus bewegt werden kann.

Durch die Verwendung eines Arretierelements wird die Handhabung des Flächenelements vereinfacht, da der Benutzer beispielsweise beim Einführen des Flächenelements in die Ansaugöffnung das Befestigungselement nicht in einer bestimmten Position halten muss. Zum anderen ist der Transport und die Lagerung vereinfacht, da ein versehentliches Herausklappen des Befestigungselements verhindert werden kann.

Das oder die Arretierelemente, die erfindungsgemäß verwendet werden können, sind beispielsweise Rastvorsprünge in einer Ausnehmung in der Oberfläche des Flächenelements. Alternativ oder zusätzlich können Arretierelemente auch an dem oder in dem Lager vorgesehen sein, über das das Befestigungselement an dem Flächenelement gehalten ist.

In einem bevorzugten Ausführungsbeispiel des Flächenelements ist der Wirkbereich des mindestens einen Befestigungselements als Rastbereich ausgebildet. Das mindestens eine Befestigungselement kann aus einer Vielzahl bekannter Befestigungselemente ausgewählt werden. Besonders vorteilhaft ist die Verwendung eines Befestigungselements, das kostengünstig hergestellt werden kann, leicht bedienbar ist und mit einem entsprechenden Gegenelement an einer Dunstabzugshaube eine lösbare Verbindung eingehen kann. Diese vorteilhaften Eigenschaften besitzt beispielsweise das in der DE 10 2010 039 454 A1 offenbarte Rastelelement. Bei diesem Befestigungselement ist der Wirkbereich als Rastbereich ausgebildet und wird zur Befestigung des Flächenelements an der Dunstabzugshaube mit einem als Aufnahmebereich für das Rastelement ausgebildeten Gegenelement in Kontakt gebracht. Zur Ausbildung einer Verbindung zwischen dem Wirkbereich des Befestigungselements und dem Gegenelement wird der Rastbereich des Befestigungselements in einen Aufnahmebereich des Gegenelements eingeführt, wobei zumindest ein leichtes Drücken des Rastelements zur Überwindung eines Widerstands in der Aufnahme erforderlich ist. In einem ebenfalls bevorzugten Ausführungsbeispiel ist der Wirkbereich des mindestens einen Befestigungselements ein Aufnahmebereich für ein als Rastelement ausgebildetes Gegenelement, das an der Dunnstabzugshaube befestigt ist. Zum Lösen der Befestigung des Flächenelements an der Dunstabzugshaube muss bei diesen beiden Ausführungsformen eine Zugkraft aufgewendet werden, um des Rastbereich aus der Rastaufnahme zu entfernen. Bei diesen Befestigungsmechanismen handelt es sich somit um sogenannte "Push-Pull-Mechanismen".

In einem bevorzugten Ausführungsbeispiel des Flächenelements ist der Wirkbereich des mindestens einen Befestigungselements als Herzkurve, die auch als Herzkulisse oder herzförmige Kulisse bezeichnet wird, ausgebildet. Das Gegenelement an der Dunstabzugshause, das zur Befestigung des Flächenelements mit diesem Wirkbereich in Kontakt kommt, ist üblicherweise ein bewegbar gelagerter Vorsprung, der in die Kulisse eingreifen kann, beispielsweise ein Bolzen, Stift oder Pin, wobei zum Beispiel ein Draht oder ein bewegbarer Nocken verwendet werden.

Vorteilhaft bei dieser Ausgestaltung des Wirkbereichs ist dessen geringe Komplexität und kostengünstige Herstellung. Weiterhin ist bei diesem Ausführungsbeispiel die Benutzerfreundlichkeit sehr hoch. Eine durch eine Herzkulisse und darin geführtem Vorsprung hergestellte Verbindung wird auch als "Push-Push-Mechanismus" bezeichnet. Zur Herstellung der Verbindung wird hierbei der Vorsprung über eine offene Seite der die Herzkulisse bildenden Nut in diese eingeführt. Durch Aufbringen einer Druckkraft von unten auf das Befestigungselement wird der Vorsprung in der Kulisse geführt, bis dieser einen Haltebereich der Herzkulisse erreicht. In dieser Position ist das Befestigungselement und damit das Flächenelement mit dem Gegenelement und damit der Dunstabzugshaube verbunden. Beim erneuten Aufbringen einer Druckkraft von unten auf das Befestigungselement wird der Vorsprung entlang der Form der Herzkulisse in dieser weiter geführt, bis er die offene Seite der Herzkulisse erreicht. Nach dem Herausführen des Vorsprungs aus der Herzkulisse ist die Verbindung zwischen dem Befestigungselement und dem Gegenelement aufgehoben.

Zur Verbindung zwischen Herzkurve und Gegenelement ist daher nur ein geringer Kraftaufwand erforderlich und durch Ausüben eines Drucks in dieselbe Richtung wie zum Verbinden, kann das Flächenelement von der Dunstabzugshaube gelöst werden. Vorteilhaft ist der einfache Aufbau dieses Befestigungsmechanismus, sowohl in Bezug auf den Wirkbereich als auch in Bezug auf das Gegenelement.

Aufbau und Funktionsweise einer Befestigung unter Verwendung einer Herzkurve werden beispielsweise in der Patentschrift DE 911 925 beschrieben.
Ein Draht, Nocken, Bolzen oder Pin, beispielsweise an einem Draht, einer Stange oder einer Feder befestigt, ist an der Dunstabzugshaube als Gegenelement angeordnet. Das Gegenelement läuft in der Herzkurve entlang und hält das Flächenelement fest oder entriegelt es zur Entnahme.

Obwohl vorzugsweise der Wirkbereich des Befestigungselements als Herzkulisse ausgestaltet ist und das Gegenelement einen Vorsprung zum Eingreifen in die Herzkulisse aufweist, ist es erfindungsgemäß auch möglich, dass die Herzkulisse an dem Gegenelement vorgesehen ist und der Wirkbereich des Befestigungselements einen Vorsprung zum Eingreifen in die Herzkulisse aufweist.

Gemäß einer bevorzugten Ausführungsform weist das Befestigungselement einen Betätigungsbereich zur Herstellung der lösbaren Verbindung auf, der durch einen Teil der Unterseite des Flächenelements gebildet wird. Der Betätigungsbereich stellt somit vorzugsweise einen Teil des Flächenelements dar, so dass das Vorsehen eines separaten Betätigungselements, wie beispielsweise eines Griffes nicht erforderlich ist. Vielmehr kann der Benutzer durch Ausüben einer Druckkraft auf die Unterseite des Flächenelements in dem Bereich in dem an der Oberseite das Befestigungselement vorgesehen ist, die lösbare Verbindung herstellen. Zum Lösen der Verbindung kann bei einer Push-Push-Verbindung erneut eine Druckkraft auf die Unterseite des Flächenelements aufgebracht werden. Bei einer Push-Pull-Verbindung kann diese beispielsweise durch Ziehen an einer durch eine Schräge gebildeten Seitenfläche des Flächenelements im Bereich des Befestigungselements gelöst werden.

Der Vorteil der Ausführungsform, bei der der Betätigungsbereich durch einen Teil der Unterseite des Flächenelements gebildet wird, liegt darin, dass auch an der Unterseite des Flächenelements kein separates Betätigungselement vorgesehen werden muss und somit kein Überstand über die Unterseite des Flächenelements hinaus besteht.

In einem Ausführungsbeispiel des erfindungsgemäßen Flächenelements befindet sich das Befestigungselement im Zeitpunkt der Lieferung, wenn es sich in der Anlieferverpackung befindet, in der Ruheposition. Vor der ersten Montage in der Dunstabzugshaube wird es herausgeklappt in die Betriebsposition und rastet fest ein, so dass eine Rückstellung in die Ruheposition nicht mehr möglich ist.

Bekannte Lösungen des Standes der Technik zur Befestigung von Flächenelementen verwenden für Verriegelungsvorrichtungen unterschiedliche Rastungen, welche normalerweise sichtbar sind. Dadurch wird die Filterfläche unterbrochen, wenn im Flächenelement ein Filterelement aufgenommen ist. Vorteilhaft an der erfindungsgemäßen Lösung ist insbesondere, dass am Flächenelement keine nach unten überstehenden Knebel oder Halter angeordnet sind, die beim Reinigen stören. Zudem ragt das erfindungsgemäße Befestigungselement in der Betriebsposition nur geringfügig in die Fläche des Filterelements hinein, so dass auch die Filterfläche maximiert wird.

Gemäß einem weiteren Aspekt wird die Aufgabe erfindungsgemäß gelöst durch eine Dunstabzugshaube, die ein Gehäuse, mindestens ein erfindungsgemäßes Flächenelement und mindestens ein Gegenelement zur Ausbildung einer lösbaren Verbindung zwischen dem mindestens einen Befestigungselement und dem mindestens einen Gegenelement, zur lösbaren Befestigung des mindestens einen Flächenelements an dem Gehäuse der Dunstabzugshaube umfasst. Die Dunstabzugshaube ist also dadurch gekennzeichnet, dass sie ein Flächenelement mit den erfindungsgemäßen Merkmalen umfasst. Zur Befestigung des erfindungsgemäßen Flächenelements ist an der Dunstabzugshaube ein Gegenelement angeordnet, welches mit dem Wirkbereich des mindestens einen Befestigungselements zur Befestigung des Flächenelements in Kontakt gebracht wurde. Besonders vorteilhaft ist, dass bereits eine geringfügige Anpassung von im Stand der Technik bekannten Dunstabzugshauben durch Anordnung eines Gegenelements die lösbare Anordnung des erfindungsgemäßen Flächenelements in der Dunstabzugshaube ermöglicht. Dieser Vorteil ergibt sich aufgrund der geringen Komplexität des am erfindungsgemäßen Flächenelement vorgesehenen, mindestens einen Befestigungselements und des entsprechenden Gegenelements an der Dunstabzugshaube. Insgesamt gelten die Vorteile und Merkmale, die bezüglich des erfindungsgemäßen Flächenelements beschrieben werden - soweit anwendbar -auch entsprechend für die erfindungsgemäße Dunstabzugshaube. So zeichnet sich diese Dunstabzugshaube unter anderem durch hohe Benutzerfreundlichkeit beim Einsetzen und Entnehmen des Flächenelements aus.

In einem bevorzugten Ausführungsbeispiel der erfindungsgemäßen Dunstabzugshaube ist die lösbare Verbindung zwischen dem mindestens einen Befestigungselement und dem mindestens einen Gegenelement eine lösbare Push-Push-Verbindung oder eine lösbare Push-Pull-Verbindung.
Dieses Ausführungsbeispiel ist insbesondere vorteilhaft, weil sowohl die lösbare Push-Push-Verbindung als auch die lösbare Push-Pull-Verbindung leicht zu bedienen sind. Auch zeichnen sich die mit dem Wirkbereich des jeweiligen Befestigungselements in Kontakt zu bringenden Gegenelemente durch geringe Komplexität und damit auch kostengünstige Herstellung aus. Auch kann eine geringfügige Modifikation einer im Stand der Technik bekannten Dunstabzugshaube genügen, um diese für die Aufnahme und Befestigung eines erfindungsgemäßen Flächenelements vorzubereiten.

Die vorliegende Erfindung wird mit den beigefügten Zeichnungen näher erläutert. Es zeigen
Fig. 1: eine schematische, perspektivische Ansicht eines Ausführungsbeispiels eines erfindungsgemäßen Flächenelements mit einem Befestigungselement in der Ruheposition P1;
Fig. 2: eine schematische, perspektivische Ansicht des in Fig. 1 gezeigten Ausführungsbeispiels eines erfindungsgemäßen Flächenelements mit einem Befestigungselement in der Betriebsposition P2;
Fig. 3: eine schematische Schnittansicht einer Ausführungsform einer Dunstabzugshaube mit darin angeordnetem und befestigtem Flächenelement.

Im Folgenden wird die Erfindung anhand eines Ausführungsbeispiels erneut erläutert. Die dabei offenbarten Merkmale können auch einzeln erfindungswesentlich sein. Das Beispiel erläutert die Erfindung näher, ohne den Umfang der Erfindung zu beschränken.

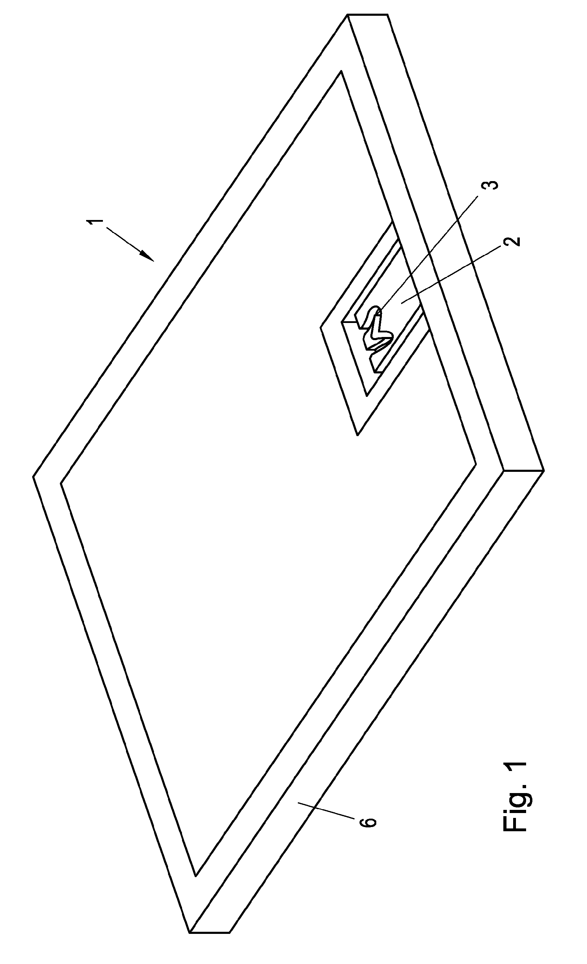

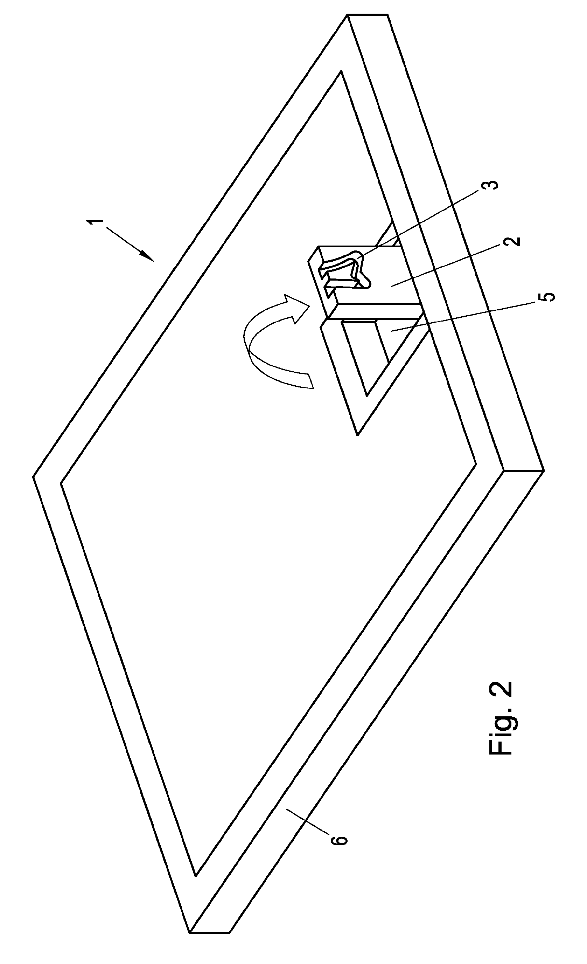

Die Figuren 1 und 2 zeigen ein Ausführungsbeispiel des erfindungsgemäßen Flächenelements 1, bei welchem das an dem Flächenelement 1 angeordnete mindestens eine Befestigungselement 2 einen Wirkbereich 3 aufweist, der als Herzkurve ausgebildet ist, das heißt in dem eine Herzkulisse vorgesehen ist. Das Befestigungselement 2 stellt in dieser Ausführungsform eine rechteckige Platte dar, die an einem Ende über ein nicht dargestelltes Lager mit dem Flächenelement 1 verbunden ist. Im Bereich des freien Endes ist an der Oberseite des Befestigungselements eine Herzkulisse eingebracht. Dieser Bereich stellt bei der dargestellten Ausführungsform somit den Wirkbereich 3 des Befestigungselements 2 dar.

In Figur 1 wird eine perspektivische Ansicht dieses Ausführungsbeispiels des erfindungsgemäßen Flächenelements 1 gezeigt, wobei die Oberseite des Flächenelements 1 dem Betrachter zugewandt ist. Das Flächenelement 1 ist rechteckig und in den Randbereichen wird das Flächenelement von Rahmen 6 begrenzt. Rahmen 6 erstreckt sich von den Seitenbereichen des Flächenelements bis in einen Teilbereich der Oberfläche von Flächenelement 1. Das Flächenelement 1 stellt hierbei beispielsweise ein Filterelement dar, wobei das Filtermedium, beispielsweise Streckmetallfilterlagen, in dem Rahmen 6 gehalten sind. Das Befestigungselement 2 ist dabei an der Oberseite des Rahmens 6 gelagert.

Das Befestigungselement 2 befindet sich in der Ansicht der Fig. 1 in der Ruheposition P1. In der Ruheposition P1 liegt der als Herzkurve ausgebildete Wirkbereich 3 des Befestigungselements 2 an der Oberseite des Flächenelements 1 an. Gezeigt wird ein Flächenelement, welches in der Oberseite eine Ausnehmung 5 zur Aufnahme des Befestigungselements besitzt. Wie man dieser Figur entnehmen kann, stehen in der Ruheposition P1 keine Befestigungsmittel von der Oberseite des Flächenelements ab.

Fig. 2 zeigt eine perspektivische Ansicht des Ausführungsbeispiels der Fig. 1, bei welchem sich das Befestigungselement in der Betriebsposition P2 befindet. Um das Befestigungselement aus der Ruheposition P1, die in Fig. 1 gezeigt ist, in die Betriebsposition P2 zu überführen, muss das Befestigungselement bewegt, beispielsweise verschoben oder verschwenkt werden. Das Befestigungselement wird in der Richtung des in der Darstellung gezeigten Pfeils bewegt, also hochgeklappt. In dieser Position überragt der als Herzkurve ausgebildete Wirkbereich 3 die Oberseite des Flächenelements 1. In der dargestellten Betriebsposition kann der Wirkbereich 3 des Befestigungselements 2 mit einem nicht dargestellten Gegenelement 4 in Kontakt gebracht werden. Zum Verklinken mit dem als Herzkurve ausgebildeten Wirkbereich 3 des Befestigungselements 2 weist eine erfindungsgemäße Dunstabzugshaube als Gegenelement einen Bolzen, Stift oder Pin auf, beispielsweise auf einem Draht, einer Stange oder einer Feder befestigt. Je nach Ausführungsbeispiel des erfindungsgemäßen Flächenelements 1 kann das Befestigungselement 2 wieder aus der Betriebsposition P2 in die Ruheposition P1 bewegt werden, oder verbleibt in der Betriebsposition P2.

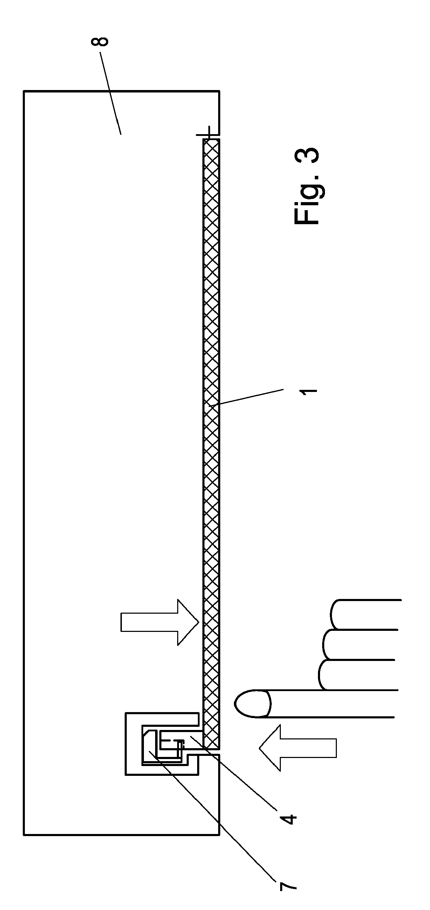

Fig. 3 zeigt eine seitliche Schnittansicht einer Dunstabzugshaube 8 mit einem darin angeordneten Flächenelement 1. Dieses Flächenelement entspricht dem in den Figuren 1 und 2 gezeigten Ausführungsbeispiel. Gezeigt wird das Gegenelement 4 mit Feder 7. Das Gegenelement 4 wird im als Herzkurve ausgebildeten Wirkbereich 3 des Befestigungselements 2 mit dem Wirkbereich 3 geführt. Die in der Figur dargestellten Pfeile in Kombination mit der schematisch dargestellten Hand deuten die Richtung an, in welcher der Benutzer diese Push-Push-Verbindung herstellt und löst um damit die Befestigung des Flächenelements 1 an der Dunstabzugshaube herzustellen oder zu lösen. Wie sich aus Figur 3 ergibt, wird die Verbindung somit durch Aufbringen einer Druckkraft von unten auf einen Betätigungsbereich des Flächenelements 1 hergestellt und gelöst.

Die Erfindung stellt somit ein Flächenelement bereit, welches benutzerfreundlich, lösbar an einer Dunstabzugshaube befestigt werden kann. Das erfindungsgemäße Flächenelement zeichnet sich durch einen vergleichsweise geringen Platzbedarf im Anlieferungszustand aus, wodurch die Kosten für Verpackung, Transport und Lagerung im Vergleich zu bekannten Vorrichtungen verringert werden. Darüber hinaus kann das an dem erfindungsgemäßen Flächenelement angeordnete Befestigungsmittel zwei Positionen, Ruheposition und Betriebsposition einnehmen. In der Betriebsposition gibt das Befestigungselement die in der Ruheposition abgedeckte Fläche frei, was vorteilhaft ist gegenüber Vorrichtungen, bei welchen potenzielle Luftzutrittsflächen durch Befestigungsmittel abgedeckt werden.

### Bezugszeichenliste

- 1: Flächenelement
- 2: Befestigungselement
- 3: Wirkbereich
- 4: Gegenelement
- 5: Ausnehmung
- 6: Rahmen
- 7: Feder
- 8: Dunstabzugshaube
- P1: Ruheposition
- P2: Betriebsposition

## Patentansprüche

1. Flächenelement, (1) für eine Dunstabzugshaube,
das zur lösbaren Befestigung an einer Dunstabzugshaube (8) mindestens ein Befestigungselement (2) mit mindestens einem Wirkbereich (3) aufweist,
**dadurch gekennzeichnet, dass** das mindestens eine Befestigungselement (2) an der Oberseite des Flächenelements (1) angeordnet ist,
das mindestens eine Befestigungselement (2) zwischen einer Ruheposition (P1) und einer Betriebsposition (P2) bewegbar gelagert ist,
in der Ruheposition (P1) der Wirkbereich (3) des Befestigungselements (2) an der Oberseite des Flächenelements (1) anliegt, und in der Betriebsposition (P2) der Wirkbereich des Befestigungselements (2) die Oberseite des Flächenelements (1) überragt.

2. Flächenelement (1), gemäß Anspruch 1, **dadurch gekennzeichnet, dass** das Flächenelement (1) eine Filtereinheit aufweist und vorzugsweise dass das Flächenelement (1) einen Rahmen (7) aufweist und die Filtereinheit in dem Rahmen (7) aufgenommen ist.

3. Flächenelement (1), gemäß einem der Ansprüche 1 oder 2, **dadurch gekennzeichnet, dass** das Flächenelement (1) einen Fettfilter, ein Wrasenleitblech oder eine Kombination aus Fettfilter und Wrasenleitblech aufweist.

4. Flächenelement (1), gemäß einem der vorangehenden Ansprüche, **dadurch gekennzeichnet, dass** das mindestens eine Befestigungselement (2) einen Sockelbereich (5) aufweist und der Wirkbereich (3) auf dem Sockelbereich angeordnet ist.

5. Flächenelement (1), gemäß einem der vorangehenden Ansprüche, **dadurch gekennzeichnet, dass** das Flächenelement (1) mindestens ein Arretierelement zur Arretierung des Befestigungselements (2) in der Ruheposition (P1) und/oder der Betriebsposition (P2) aufweist.

6. Flächenelement (1), gemäß einem der vorangehenden Ansprüche, **dadurch gekennzeichnet, dass** der Wirkbereich (3) des mindestens einen Befestigungselements (2) als Rastbereich ausgebildet ist.

7. Flächenelement (1), gemäß einem der vorangehenden Ansprüche, **dadurch gekennzeichnet, dass** der Wirkbereich (3) des mindestens eine Befestigungselements (2) als Herzkurve ausgebildet ist.

8. Flächenelement (1), gemäß einem der vorangehenden Ansprüche, **dadurch gekennzeichnet, dass** das Flächenelement (1) einen Betätigungsbereich zur Herstellung der lösbaren Verbindung aufweist und der Betätigungsbereich einen Teil der Unterseite des Flächenelements (1) darstellt, der vorzugsweise durch eine ebene Fläche gebildet ist.

9. Dunstabzugshaube (8), umfassend ein Gehäuse, mindestens ein Flächenelement (1), gemäß einem der Ansprüche 1 bis 8, und mindestens ein Gegenelement (4) zur Ausbildung einer lösbaren Verbindung zwischen Befestigungselement (2) und Gegenelement (4), zur lösbaren Befestigung des mindestens einen Flächenelements (1) an dem Gehäuse der Dunstabzugshaube (8).

10. Dunstabzugshaube (8), gemäß Anspruch 9, **dadurch gekennzeichnet, dass** die lösbare Verbindung zwischen dem mindestens einen Befestigungselement (2) und dem mindestens einen Gegenelement (4) eine lösbare Push-Push-Verbindung oder eine lösbare Push-Pull-Verbindung ist.
